# EUROPEAN PATENT APPLICATION

(11) **EP 0 889 601 A2**
(43) Date of publication of application: **07.01.1999**
(21) Application number: 98111906.8
(22) Date of filing: 26.06.1998
(51) Int. Cl.: H04B 1/74

(54) **Radio communication system having regular channels and protection channel selectively used for high-priority signal and low-priority signal**

(30) Priority: 30.06.1997 JP 189247/97
(71) Applicant: NEC CORPORATION, Tokyo (JP)
(72) Inventor: Taniguchi, Takahiro, Minato-ku, Tokyo (JP)
(74) Representative: VOSSIUS & PARTNER

(57) **Abstract**

A microwave digital communication system has plural regular channels and at least one protection channel, and the regular channels and the protection channel respectively propagate high-priority signals and a low-priority signal between ground stations under non-faulty conditions; when a trouble deteriorates one of the regular channels, switching units on the transmitter side assign the high-priority signal and the low-priority signal to the protection channel and the faulty regular channel, respectively, so as to exchange the high-priority signal and the low-priority signal between the faulty regular channel and the protection channel, and switching units on the receiver side allow the high-priority signal and the low-priority signal to return to the regular channel and the protection channel so that the microwave digital communication system continuously transfers the low-priority signal through the faulty regular channel.

## Description

This invention relates to a radio communication system and, more particularly, to a microwave digital communication system with a protection channel.

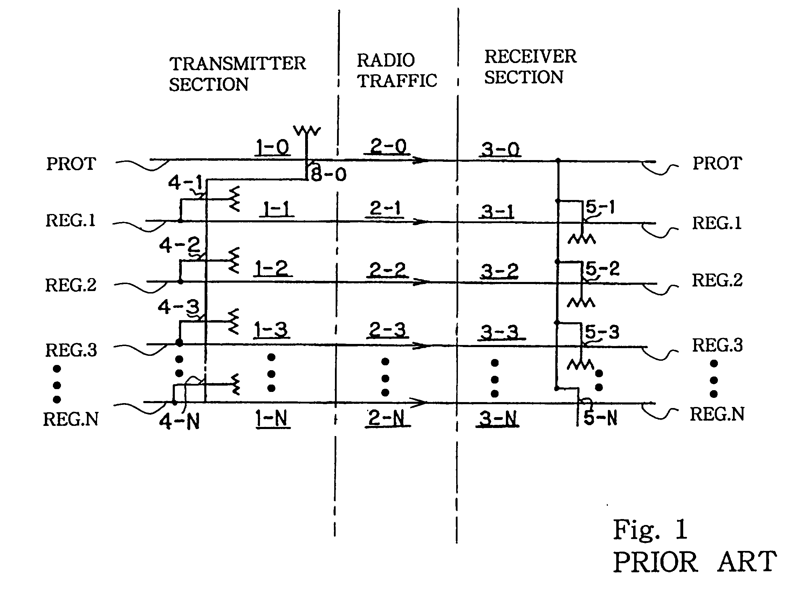

A microwave digital communication system has protection channels, and exchanges a deteriorated regular channel with one of the protection channels. Figure 1 illustrates a typical example of the microwave digital communication system. The prior art microwave digital communication system has regulator channels REG.1, REG.2, REG.3, ..... and REG. N and a protection channel PROT. N transmitters are respectively provided for the regular channels REG.1 to REG.N, and a transmitter is associated with the protection channel PROT. (N+1) receivers are corresponding to the regular channels REG.1 to REG.N and the protection channel PROT, respectively. The regular channels REG.1 to REG.N are divided into transmitter sections 1-1 to 1-N, radio traffics 2-1 to 2-N and receive, sections 3-1 to 3-N. Similarly, the protection channel PROT is divided into a transmitter section 1-0, a radio traffic 2-0 and a receiver section 3-0. Switching units 4-1 to 4-N are associated with the regular channels REG.1 to REG.N, and a switching unit 8-0 is associated with the protection channel PROT. Each of the switching units 4-1 to 4-N is used to change the associated regular channel REG.1, ... or REG.N through the switching unit 8-0 to the protection channel PROT. Similarly, switching units 5-1 to 5-N are associated with the regular channels REG.1 to REG.N, and each of the switching units 5-1 to 5-N is also used to change the associated regular channel REG.1, ... or REG.N to the protection channel PROT.

When all the regular channels REG.1 to REG.N are available for the radio communication without a trouble, pieces of information are transferred from the transmitters through the regular channels REG.1 to REG.N to the receivers. For example, a high-priority transmitting signal representative of the piece of information is supplied to a transmitter, and is transferred through the transmitter section 1-2. The high-priority transmitting signal is converted to an electromagnetic wave, and the electromagnetic wave is propagated through the radio traffic 2-2. The electromagnetic wave reaches the receiver, and the electromagnetic wave is converted to a receiving signal. The receiving signal is propagated through the receiver section 3-2. Thus, the high-priority communication is carried out through the regular channels REG.1 to REG.N, and the protective channel PROT stands apart from the high-priority communication in so far as the regular channels REG.1 to REG.N are free from trouble. Nevertheless, the protective channel PROT is used for a low-priority communication. A low-priority signal is transferred through the transmitter section 1-0, the radio traffic 2-0 and the receiver section 3-0. However, any high-priority transmitting signal is never transferred through the associated switching unit 4-1, ... or 4-N to the transmitter section 1-0 and through the receiver section 3-0 to the switching unit 5-1, ... or 5-N.

If one of the regular channels REG.1 to REG.N is troubled, the regular channel REG.1/../REG.N deteriorates the digital communication between the transmitter and the receiver. Then, the prior art microwave digital communication system changes the regular channel REG.1/... / REG.N to the protection channel PROT, and a high-priority transmitting signal is transferred from the transmitter through the associated switching unit 4-1/.../ 4-N, the switching unit 8-0 to the protective channel PROT. The high-priority transmitting signal is converted to an electromagnetic wave, and the electromagnetic wave is propagated through the radio traffic 2-0 to the receiver. The electromagnetic wave is converted to a receiving signal, and the receiving signal is transferred through the switching unit 5-1/ .../ 5-N to the receiver. While the protection channel PROT is propagating the high-priority transmitting signal to the receiver, the low-priority signal can not use the protection channel PROT, and the low-priority communication is interrupted.

Even through the low-priority communication is less important rather than the high-priority communication, it is not desirable to interrupt the low-priority signal. The number of regular channels REG.1 to REG.N is getting larger and larger, and the probability of interruption is increased together with the number of regular channels REG.1 to REG.N.

It is therefore an important object of the present invention to provide a radio communication system, which does not interrupt a low-priority communication at temporary assignment of a protection channel to a high-priority communication.

The present inventor contemplates the problem inherent in the prior art microwave digital communication system, and noticed that a fault regular channel was still available for the low-priority communication.

To accomplish the object, the present invention proposes to use the faulty regular channel for the low-priority communication.

In accordance with one aspect of the present invention, there is provided a radio communication system for transferring high-priority signals and at least one low-priority signal which comprises a plurality of regular channels transferring the high-priority signals under non-faulty condition and the at least one low-priority signal under faulty condition, at least one protection channel transferring one of the high-priority signals and the low-priority signal, a first switching means connected between the plurality of regular channels and the at least one protection channel for changing the one of the high-priority signals from one of the plurality of1 regular channels under the faulty condition to the at least one protection channel and a second switching means connected between the at least one protection channel and the plurality of regular channels for changing the at least one low-priority signal from the at least one protection channel to the one of the plurality of regular channels under the faulty condition.

The features and advantages of the radio communication system will be more clearly understood from the following description taken in conjunction with the accompanying drawings in which:
Fig. 1 is a diagram showing the prior art microwave digital communication system; and
Fig. 2 is a diagram showing a microwave digital communication system according to the present invention.

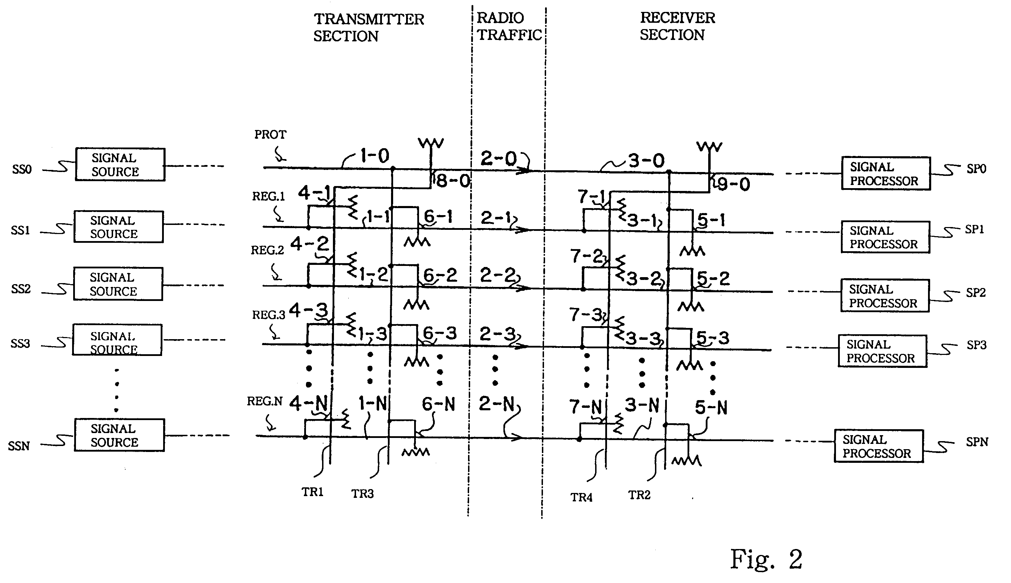

Referring to figure 2 of the drawings, a microwave digital communication system embodying the present invention has regular channels REG.1, REG.2, REG.3, ... and REG.N and a protection channel PROT. The protection/regular channels PROT/ REG.1 to REG.N are divided into respective transmitter sections 1-0, 1-1, 1-2, 1-3, ... and 1-N, respective radio traffics 2-0, 2-1, 2-2, 2-3, .... and 2-N and respective receiver sections 3-0, 3-1, 3-2, 3-3,... and 3-N. When one of the regular channels REG.1 to REG.N gets out of the order, the faulty regular channel is replaced with the protection channel PROT. The transmitter sections 1-0 to 1-N and the receiver sections 3-0 to 3-N are incorporated in different ground stations.

The transmitter sections 1-0 to 1-N are respectively associated with signal sources SS0, SS1, SS2, SS3,.. and SSN, and the signal sources SS0 to SSN selectively generate a low-priority transmitting signal and high-priority transmitting signals. On the other hand, the receiver sections 3-0 to 3-N are respectively associated with signal processors SP0, SP1, SP2, SP3,... and SPN, and a low-priority receiving signal and high-priority receiving signals are selectively processed by the signal processors SP0 to SPN. The high-priority receiving signals and the low-priority receiving signal are corresponding to the high-priority transmitting signals and the low-priority transmitting signal.

First switching units 4-1, 4-2, 4-3, .. and 4-N are respectively associated with the regular channels REG.1 to REG.N, and are connected between the transmitter sections 1-0 to 1-N and a signal transfer line TR1. A second switching unit 8-0 is associated with the protection channel PROT, and is connected between the signal transfer line TR1 and the transmitter section 1-0. Third switching units 5-1, 5-2, 5-3,... and 5-N are associated with the regular channels REG.1 to REG.N, and are connected between the receiver sections 3-1 to 3-N and a signal transfer line TR2. Thus, the first switching unit 4-1... or 4-N, the second switching unit 8-0 and the third switching unit 5-1... or 5-N replace the associated regular channel REG.1.... or REG.N with the protection channel PROT. In other words, the protection channel PROT can propagate any one of the high-priority transmitting signals.

The microwave digital communication system further has a signal transfer line TR3 connected to the transmitter section 1-0 of the protection channel PROT and fourth switching units 6-1, 6-2, 6-3,... and 6-N connected between the signal transfer line TR3 and the transmitter sections 1-1 to 1-N of the regular channels REG.1 to REG.N. The microwave digital communication system further has a signal transfer line TR4, fifth switching units 7-1, 7-2, 7-3,... 7-N connected between the signal transfer line TR4 and the receiver sections 3-1 to 3-N and a sixth switching unit 9-0 connected between the receiver section 3-0 and the signal transfer line TR4. The fourth switching unit 6-1... or 6-N, the sixth switching unit 9-0 and the fifth switching unit 7-1... or 7-N replaces the protection channel PROT with a faulty regular channel REG.1... or REG.N.

The first switching units 4-1 to 4-N are connected to the transmitter sections 1-1 to 1-N at certain points closer to the signal sources SS1 to SSN than the fourth switching units 6-1 to 6-N, and the signal transfer line TR3 is connected to the transmitter section 1-0 closer to the signal source SS0 than the second switching unit 8-0. The third switching units 5-1 to 5-N are connected to the receiver sections 3-1 to 3-N closer to the signal processors SP1 to SPN than the fifth switching units 7-1 to 7-N, and the sixth switching unit 9-0 is connected to the receiver section 3-0 closer to the signal processor SP0 than the signal transfer line TR2. For this reason, even if a regular channel is exchanged with the protection channel, the high-priority signal and the low-priority signal are never interfered with each other as will be described hereinlater.

In this instance, the first switching units 4-1 to 4-N, the second switching unit 8-0 and the third switching units 5-1 to 5-N as a whole constitute a first switching means, and the fourth switching units 6-1 to 6-N, the fifth switching units 7-1 to 7-N and the sixth switching unit 9-0 form in combination a second switching means.

While all the regular channels REG.1 to REG.N are providing high-quality communication, the signal sources SS1-SSN supply the high-priority transmitting signals to the transmitter sections 1-1 to 1-N of the regular channels REG.1 - REG.N, respectively, and the signal source SS0 supplies the low-priority transmitting signal to the transmitter section 1-0 of the protection channel PROT. The high-priority transmitting signals and the low- priority transmitting signal are converted to high-priority electromagnetic waves and a low-priority electromagnetic wave, and arrive as the receivers. The high-priority electromagnetic waves and the low-priority electromagnetic wave are converted to the high-priority receiving signals and the low-priority receiving signal. The receiver section 3-0 and the receiver sections 3-1 to 3-N propagate the low-priority receiving signal and the high-priority receiving signals to the signal processors SP1-SPN, respectively. Thus, the microwave digital communication system behaves as similar to the prior art microwave digital communication system under the conditions without any trouble.

Assuming now that one of the regular channels REG.1 to REG.N is deteriorated, the regular channel REG.1... or REG.N is exchanged with the protection channel PROT as follows. The regular channel REG.2 is assumed to be deteriorated. Although a trouble deteriorates the regular channel REG.2, the regular channel REG.2 can still connect a signal source and a signal processor. When the trouble takes place, the signal source SS0 is generating the low-priority transmitting signal, and the signal source SS2 is supplying the high-priority transmitting signal to the associated regular channel REG.2.

Upon detection of the trouble, the switching unit 6-2 guides the low-priority transmitting signal to the regular channel REG.2, and the low-priority transmitting signal is converted to the low-priority electromagnetic wave. The low-priority electromagnetic wave is propagated through the radio traffic 2-2, and arrives at the receiver section 3-2. The low-priority electromagnetic wave is converted to the low-priority receiving signal, and the switching units 7-2 and 9-0 guide the low-priority receiving signal to the signal processor SP0. Thus, the low-priority signal is transferred to the signal processor SP0 before the high-priority signal.

On the other hand, the high-priority transmitting signal passes the switching units 4-2 and 8-0, and is converted to the high-priority electromagnetic wave. The radio traffic 2-0 propagates the high-priority electromagnetic wave to the receiver section 3-0, and is converted to the high-priority receiving signal. The high-priority receiving signal passes the switching unit 5-2, and is supplied to the signal processor SP2. Thus, the deteriorated regular channel REG.2 and the protection channel PROT are exchanged with each other, and both of the high-priority signal and the low-priority signal are transferred between the transmitter and the receiver without interruption.

As will be appreciated from the foregoing description, the fourth, fifth and sixth switching units are added to the microwave digital communication system according to the present invention, and the fourth, fifth and sixth switching units allow the protection channel PROT and the deteriorated regular channel to continuously transfer the high-priority signals and the low-priority signal without interruption.

Although a particular embodiment of the present invention has been shown and described, it will be apparent to those skilled in the art that various changes and modifications may be made without departing from the spirit and scope of the present invention.

For example, a radio communication system according to the present invention may have more than one protection channel, and radio traffics is never limited to the microwave.

## Claims

1. A radio communication system for transferring high-priority signals and at least one low-priority signal, comprising:
a plurality of regular channels (REG.1 to REG.N) transferring said high-priority signals under non-faulty condition and said at least one low-priority signal under faulty condition;
at least one protection channel (PROT) transferring one of said high-priority signals and said low-priority signal; and
a first switching means (4-1 to 4-N/ 8-0/ 5-1 to 5-N) connected between said plurality of regular channels (REG.1 to REG.N) and said at least one protection channel (PROT) for changing said one of said high-priority signals from one of said plurality of regular channels under said faulty condition to said at least one protection channel,
characterized by further comprising
a second switching means (6-1 to 6-N, 7-1 to 7-N/ 9-0) connected between said at least one protection channel and said plurality of regular channels for changing said at least one low-priority signal from said at least one protection channel (PROT) to said one of said plurality of regular channels under said faulty condition.

2. The radio communication system as set forth in claim 1, in which said plurality of regular channels (REG.1 to REG.N) include respective regular transmitter sections (1-1 to 1-N), respective regular radio traffics (2-1 to 2-N) and respective regular receiver sections (3-1 to 3-N), and said at least one protection channel includes a redundant transmitter section (1-0), a redundant radio traffic (2-0) and a redundant receiver section (3-0),
said first switching means (4-1 to 4-N/ 8-0/ 5-1 to 5-N) guiding said one of said high-priority signal from the associated regular transmitter section through said redundant radio traffic (2-0) to the associated regular receiver section,
said second switching means (6-1 to 6-N; 7-1 to 7-N/ 9-0) guiding said at least one low-priority signal from said redundant transmitting section (1-0) through one of said regular radio traffics of said one of said plurality of regular channels to said redundant receiver section (3-0).

3. The radio communication system as set forth in claim 2, in which said first switching means includes a plurality of first switching units (4-1 to 4-N) connected to said regular transmitter sections (1-1 to 1-N), a second switching unit (8-0) connected between said plurality of first switching units and said redundant transmitter section (1-0) and a plurality of third switching units (5-1 to 5-N) connected between said redundant receiver section (3-0) and said regular receiver sections (3-1 to 3-N), and
said second switching means includes a plurality of fourth switching units (6-1 to 6-N) connected between said redundant transmitter section (1-0) and said regular transmitter sections (1-1 to 1-N), a plurality of fifth switching units (7-1 to 7-N) connected to said regular receiver sections (3-1 to 3-N) and a sixth switching unit (9-0) connected between said redundant receiver section (3-0) and said plurality of fifth switching units (7-1 to 7-N).

4. The radio communication system as set forth in claim 3, in which said plurality of fourth switching units (6-1 to 6-N) are connected to said regular transmitter sections (1-1 to 1-N) at first points closer to said regular radio traffics (2-1 to 2-N) than second points between said plurality of first switching units (4-1 to 4-N) and said regular transmitter sections (1-1 to 1-N),
said second switching unit (8-0) is connected to said redundant transmitter section (1-0) at a third point closer to said redundant radio traffic (2-0) than a fourth point between said plurality of fourth switching units (6-1 to 6-N) and said redundant transmitter section (1-0),
said plurality of fifth switching units (7-1 to 7-N) are connected to said regular receiver sections (3-1 to 3-N) at fifth points closer to said regular radio traffics (2-1 to 2-N) than sixth points between said plurality of third switching units (5-1 to 5-N) and said regular receiver sections (3-1 to 3-N), and
said plurality of third switching units (5-1 to 5-N) are connected to said redundant receiver section (3-0) at a seventh point closer to said redundant radio traffic (2-0) than an eighth point between said redundant receiver section (3-0) and said sixth switching unit (9-0).

5. The radio communication system as set forth in claim 2, in which said regular transmitter sections (1-1 to 1-N) and said redundant transmitter section (1-0) are incorporated in a first ground station, and said regular receiver sections (3-1 to 3-N) and said redundant receiver section (3-0) are incorporated in a second ground station communicable with said first ground station through said regular radio traffics (2-1 to 2-N) and said redundant radio traffic (2-0).
